# EUROPEAN PATENT SPECIFICATION

(11) **EP 3 317 591 B1**
(45) Date of publication and mention of the grant of the patent: **24.02.2021**
(21) Application number: 16739426.1
(22) Date of filing: 29.06.2016
(51) Int. Cl.: F24S 25/00

(54) **MOUNTING METHOD OF CHAMBER PROFILE USING A BRACKET SCREW**
MONTAGEVERFAHREN EINES KAMMERPROFILS ANHAND EINER KLAMMERSCHRAUBE
PROCÉDÉ DE MONTAGE D'UN PROFILÉ DE CHAMBRE AU MOYEN D'UNE VIS DE SUPPORT

(30) Priority: 03.07.2015 PL 41301115
(43) Date of publication of application: 09.05.2018
(73) Proprietor: Florek, Ryszard, 33-336 Labowa (PL)
(72) Inventor: Florek, Ryszard, 33-336 Labowa (PL)
(74) Representative: Liesegang, Eva
(86) International application number: PCT/EP2016/065196
(87) International publication number: WO 2017/005580

(56) References cited:
- DE-U1- 29 903 930
- US-A- 5 964 165
- US-A1- 2012 180 406

## Description

The invention relates to a mounting method for mounting a chamber profile to a stationary or non-stationary component using a screw. According to the present solution, the screw is specially designed to eliminate problems associated with installation of chamber profiles, in particular during installation in places which are difficult to reach, like mounting guides of screening element on window frame.

Solutions for fixing chamber profiles using screws, the length of which is shorter than the height of the profile chamber so that the screw is hidden within the profile after mounting, are known. In these cases, special attention must be paid by the installer; otherwise, screws can fall inside the profile, which requires using another screw. If the screw length is similar to the height of the profile chamber, or the distance between inner walls of the profile, the screw can jam inside the profile chamber between two inner walls, and then the jammed screw may block the position where another screw should be mounted. The profile hence cannot be fixed properly.

Application No. JP2008115636 A describes a chamber profile, which serves as a frame to mount a photovoltaic panel on a roof. The profile is fixed using a screw, the length of which exceeds the profile height. The screw in its fixed position passes through the entire profile, with the screw head protruding from the profile so that the panel is fixed in an immovable manner on the rool

DE29903930U discloses a mounting kit according to the preamble of claim 1.

The invention relates to a mounting method for mounting a chamber profile to a stationary component using a screw, and to a corresponding mounting kit. The screw comprises a threaded portion and a head, wherein the threaded portion is shorter than or of the same length as the sum of heights of all chambers and thicknesses of profile walls through which the screw passes. The screw may be shorter than the distance between the outer surfaces of opposing walls through which the screw passes. The height of the head is dimensioned so that, when the screw is inserted into the profile from one side thereof and the threaded portion protrudes from the profile for engagement with the component at the opposite side, the head's distance from the nearest internal surface of the profile wall through which the screw head passes is shorter than the length of the threaded portion protruding from the profile and screwed in the stationary component, so that during installation and dismantling of the profile, the screw always rests on at least two profile walls. In the mounted position, the screw's head is fully received within the profile.

The height of the profile chamber is defined as the distance between opposing internal surfaces of profile walls, measured in parallel to the direction of the screw which can be orthogonal to the surface of the stationary component. In order to mount the profile, it is fixed in an immovable manner at the stationary component by means of the screw. Then the profile is in its fixed position, or fully mounted position.

The screw head, when the profile is fully mounted to the stationary component, abuts or adjoins the internal surface of the profile wall through which the threaded portion protrudes, rests on this surface and is completely embedded inside the profile, whereas the threaded portion in the screw's fully mounted position protrudes from the profile to be at least partially embedded in the stationary component, to the extent sufficient to fix the profile in an immovable manner. The screw head is a monolithic component. This disclosure also relates to a screw head combined with a sleeve of predetermined length into which is inserted a standard off-the-shelf screw, wherein the screw head and the sleeve can be fixed to each other or combined otherwise to form a head part, which is not part of the present invention.

The invention is applied to mounting a chamber profile using a screw comprising a threaded portion and a head to fix the chamber profile, having one of more chambers, such as two or three chambers, to a stationary or non-stationary component.

Advantageous effects of the solution are that mounting of the profile with a screw eliminates problems associated with installation of chamber profiles, in particular during installation in places which are difficult to reach. During profile mounting, the screw cannot fall inside the profile, nor can it jam inside the chamber as the screw during mounting in any position rests on at least two profile walls, in particular two opposing profile walls through which the screw is inserted. After mounting, the screw head is completely hidden in the profile chamber. A cap can be provided in the profile opening through which the screw is inserted, which seals the interior of the profile chamber and provides for aesthetic appearance of the profile in its fixed position.

Examples of the invention are described with reference to the drawings in which:
Fig. 1 - shows a single-chamber profile fixed to a stationary component using a monolithic screw.

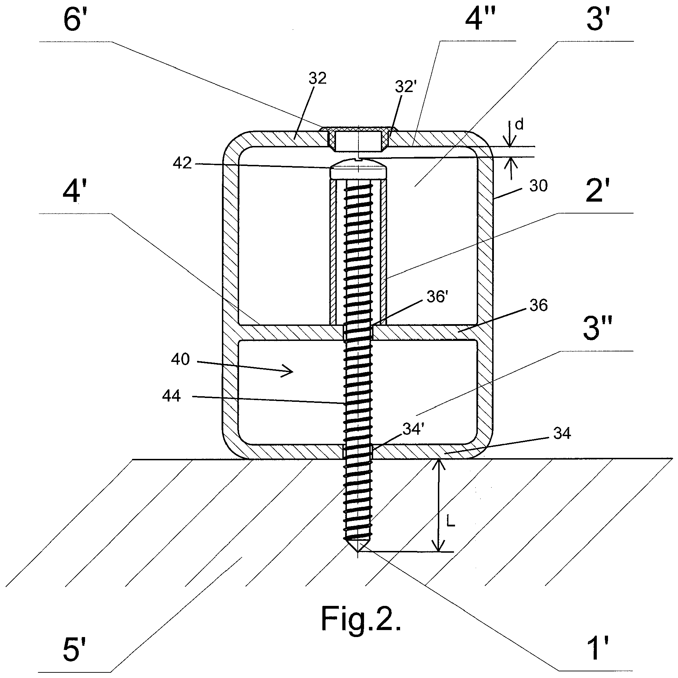

Fig. 2 - shows a double-chamber profile fixed to a stationary component using a standard screw with a sleeve to form the screw head, which is not part of the present invention.

Of course, the two examples can be combined, and the profile is not limited to any numbers of chambers nor to any particular shape.

### First example

According to the invention, a kit is provided comprising a single-chamber profile 10 and a screw 20. The screw 20 comprises a threaded portion 1 and a head 2 which are integrally formed. The profile 10, in the example shown, has a square or rectangular cross section but it is not limited to any specific cross section. It has two opposing walls 12, 14, each wall having an opening 12', 14' for receiving the screw 20. The screw is inserted into the profile 10 through opening 12' and travels through the profile to opening 14' where it exits, or extends from, to engage a component to which the profile is to be fixed. In the context of this application, wall 12 is designated as top wall and wall 14 is designated as bottom wall.

The screw 20 is dimensioned such that the threaded portion 1 of the screw, in its fully inserted and hence most extended position, for fixing the profile to the stationary component 5, extends sufficiently far to be screwed into the stationary or another component 5 using, for example, a drill - driver, so that the profile is fixed in an immovable manner. The screw head 2 is dimensioned relative to the profile such that, in the fully mounted position, it is completely received in the profile chamber 3, defined between top and bottom walls 12, 14, and adjoins the profile internal surface 4 of bottom wall 14 through which the threaded portion 1 passes. In this fully mounted position, the distance d of the head 2 from the nearest internal surface 4a of the profile wall 12 through which the screw head enters and passes is shorter than the length L of the threaded portion 1 extending from the profile and screwed in the stationary or other component 5; i.e. d < L. Further, preferably, d < L/2 or even d < L/3 or d < L/4, d < L/5, d < L/10, and d >= 0. As an example: d is about L/10 or about 1-10 mm or about 2-5 mm. In this and other examples, L is about 5-50 mm, and the height of the head is about 10-50 mm but will, of course, depend on the size of the profile and the needs of the mounting environment.

The relative sizes have the effect that, when inserting the screw 20 into the profile 10, as soon as the threaded portion engages the opening 14', the head 2 is still guided by the walls of the opening 12', and it continues to be guided through at least part of the threading operation, until the threaded portion reaches a stable fit with the receiving component. Once the screw 20 is fully mounted, the screw head 2 rests on the inner wall surface of the bottom wall 14, adjacent to the opening 14'. In the example, the screw head is of cylindrical shape, and the diameter of the opening 12' in upper wall 12 is little larger than the diameter of the screw head 2, so that the screw head is guided in the opening without creating any substantial friction or interference. The diameter of the opening 14' in bottom wall 14 is little larger than the diameter of the threaded portion so that also the threaded portion 14' is guided by the walls of the opening 14' during mounting thereof. The screw head 2 can have a different shape, such as a conical shape or any other longitudinal shape which allows guiding the screw head 2 within opening 12'during mounting of the profile 10.

Optionally, there can be a cap 6 to be inserted in the profile opening 12' through which the screw 20 is inserted. The cap 6 seals the opening 12' and provides for more aesthetic appearance of the profile after mounting.

### Second example

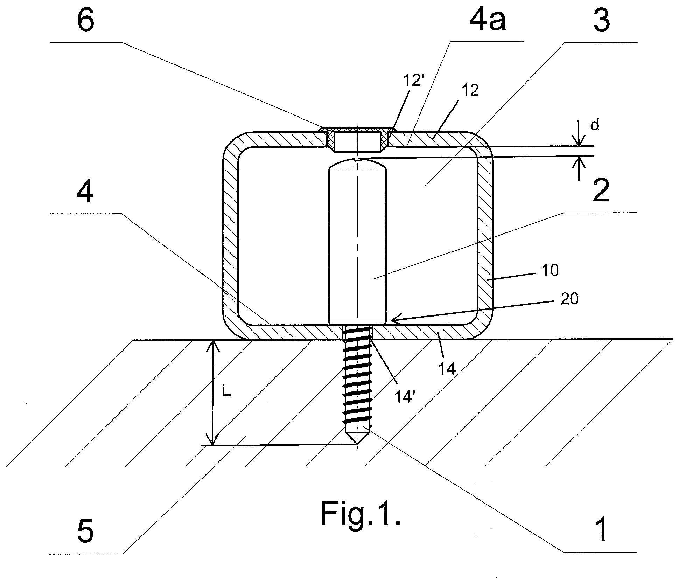

According to the second example, not part of the present invention, a double-chamber profile 30 is provided, having a fist chamber 3' and a second chamber 3". Openings 32', 34', 36' are provided in a top wall 32, a bottom wall 34 and an intermediate wall 36. The openings are aligned and are dimensioned to receive a screw 40, wherein the opening 32' in the top wall 32 is dimensioned to let the screw head 42 pass there through, and the openings 34', 36' are dimensioned to let the threaded portion 44 of the screw 40 pass there through. Concerning the dimensions of the screw and the opening reference is made to the description of figure 1.

The screw can be an off the shelf screw having a short flat or rounded screw head 42. The screw head 42 is combined with a sleeve 2' wherein sleeve is dimensioned to also pass through the top opening 32' but not through the intermediate opening 36'. The sleeve 2' can be fixed to the screw head 42 or can be loosely fitted around the threaded portion of the screw adjacent to the head. 42. In the position, where the screw is fully mounted in the profile 30, it is embedded in the first chamber 3' and the sleeve adjoins the internal surface 4' of the wall 36 separating the two adjacent chambers 3', 3".

In this position, the distance d of the head 42 to the nearest internal surface 4" of the profile wall 32, through which the screw head is inserted, is shorter than the length L of the threaded portion 44 of the screw 40 extending from the bottom opening 34' and available for being screwed into the component 5'. The relative dimensions of the distance d and extending length L can be similar or the same as described above with reference to figure 1; i.e. d < L. Further, preferably, d < L/2 or even d < L/3 or d < L/4, d < L/5, d < L/10, and d >= 0. As an example: d is about L/10 or about 1-10 mm or about 2-5 mm. L can be about 5-50 mm, and the length of the sleeve 2' can be about 10-50 mm but will, of course depend of the size of the profile and the needs of the mounting environment.

Due to the sleeve 2', the screw is guided along the inner walls of the upper opening 32' during mounting while it proceeds to extend from the lower opening 34' and is screwed into the component 5'. In its fully mounted position, the distance d of the head 42 from the nearest internal surface 4" of the profile wall 32 through which the screw head enters and passes is shorter than the length L of the threaded portion 1' extending from the profile and screwed in the stationary

There is an optional cap 6' to be inserted in the profile opening 32' through which the screw is inserted. The cap can seal the opening and provide for a more aesthetic appearance.

The threaded portion 44 of the screw traverses the lower profile chamber 3" to extend from the bottom wall 34 so that the profile can be fixed in an immovable manner to the stationary or another component 5'.

## Claims

1. A mounting kit comprising a chamber profile (10) and a screw (20), the screw (20) having a threaded portion (1) and a head (2), wherein the chamber profile (10) comprises at least one chamber (3) having a top wall (12) and a bottom wall (14), the top and bottom walls (12, 14) having aligned openings (12', 14') for receiving the screw (20), wherein the threaded portion (1) of the screw is shorter than or of the same length as the sum of heights of all chambers and thicknesses of profile walls through which the screw (20) passes, wherein, in the fully mounted position, the screw head (2) is located inside the chamber profile (10), with at least part of the threaded portion (1) extending from the bottom wall (14), and the screw head (2) is located at a position so that its distance from the nearest internal surface of the profile wall through which the screw head (2) passes is shorter than the length of the threaded portion (1) extending from the chamber profile (10), **characterized in that** the screw (20) and the screw head (2) are dimensioned relative to the chamber profile (10) such that, when inserting the screw (20) into the chamber profile, as soon as the threaded portion
(1) of the screw engages the opening (14') in the bottom wall (14), the screw head
(2) is still guided by the inner edge of the opening (12') in the top wall (12) of the chamber profile (10), and it continues to be guided through at least part of the threading operation until the threaded portion (1) reaches a stable fit with a receiving component, and once the screw (1) is fully mounted, the screw head (2) rests on the inner wall surface of the bottom wall (14), adjacent to the opening (14').

2. The kit according to one of the preceding claims, **characterised in that** the screw head (2) and the threaded portion (1) create a monolithic component.

3. The kit according to one of the preceding claims, **characterised in that** the screw head (2) is in the shape of a cylinder.

4. A method of mounting a chamber profile (10) to a receiving component using a screw (20), the screw (20) comprising a threaded portion (1) and a head (2), and the chamber profile (10) comprising at least one chamber (3) having a top wall (12) and a bottom wall (14), the top and bottom walls (12, 14) having aligned openings (12', 14') for receiving the screw (20), wherein the threaded portion (1) of the screw (20) is shorter than or of the same length as the sum of heights of all chambers and thicknesses of profile walls through which the screw (20) passes, wherein in the fully mounted position, the screw head (2) is located inside the chamber profile (10), and the height of the screw head (2) is spaced from the nearest internal surface of the top wall (12) through which the screw head (2) passes by a distance smaller than the length of the threaded portion (1) extending from the bottom wall (14), wherein the screw (20) is inserted into the chamber profile (10) through the opening (12') in the top wall (12) and through the chamber profile (10) so that the threaded portion (1) extends from the opening (14') in the bottom wall (14), **characterised in that**, when inserting the screw (20) into the chamber profile (10), as soon as the threaded portion (1) of the screw (20) engages the opening (14') in the bottom wall (14), the screw head (2) is still guided by the inner edge of the opening (12') in the top wall (12) of the chamber profile, and it continues to be guided through at least part of the threading operation until the threaded portion (1) reaches a stable fit with a receiving component, and once the screw (1) is fully mounted, the screw head (2) rests on the inner wall surface of the bottom wall (14), adjacent to the opening (14').

5. The method of claim 4, **characterized in that**, in the fully mounted position, the head (2) of the screw (20) is received within the chamber profile (10), with no part of the extending therefrom.

6. The method according to one of claims 4 or 5, **characterised in that**, in the fully mounted position, the threaded portion (1) of the screw (20) extending from the bottom wall (14) of the chamber profile (10) is at least partially embedded inside the receiving component.

7. The method according to one of claims 4 to 6, **characterised in that** the screw head (2) and the threaded portion (1) create a monolithic component.

## Patentansprüche

1. Montagesatz bestehend aus einem Kammerprofil (10) und einer Schraube (20) mit einem Gewindeteil (1) und einem Kopf (2), wobei das Kammerprofil (10) mindestens eine Kammer (3) mit einer oberen Wand (12) und einer unteren Wand aufweist (14), die wiederum koaxiale Öffnungen (12', 14') für die Schraube (20) aufweisen, wobei der Gewindeteil (1) der Schraube eine Länge hat, die kleiner oder gleich der Summe der Höhe aller Kammern und der Dicke der Profilwände ist, durch die die Schraube verläuft, und im montierten Zustand der Kopf (2) der Schraube im Kammerprofil (10) und ein Abschnitt des Gewindeteils (1) außerhalb der unteren Wand (14) befindlich sind, und der Kopf (2) sich in einer Position befindet, in der der Abstand zu der nächsten Innenfläche der Profilwand, durch die der Schraubenkopf läuft, kleiner als die Länge des aus dem Kammerprofils (10) kommenden Gewindeteils (1) ist, **dadurch gekennzeichnet, dass** die Schraube (20) und der Kopf (2) der Schraube je nach Kammerprofil (10) so dimensioniert sind, dass beim Einsetzen der Schraube in das Kammerprofil, wenn der Gewindeteil (1) die Öffnung (14') in der unteren Wand (14) erreicht, der Kopf (2) der Schraube weiter durch die Innenkante der Öffnung (12') in der unteren Wand (12) des Kammerprofils (10) bis zu der Stellung geführt wird, in welcher der Gewindeteil (1) eine stabile Verbindung mit dem feststehenden Element erreicht, und wenn die Schraube (20) vollständig montiert ist und der Kopf (2) der Schraube an der Innenfläche der unteren Wand (14) um die Öffnung (14') herum anlehnt.

2. Montagesatz nach einem der vorhergehenden Ansprüche, **dadurch gekennzeichnet, dass** der Kopf (2) der Schraube und der Gewindeteil (1) ein monolithisches Element darstellen.

3. Montagesatz nach einem der vorhergehenden Ansprüche, **dadurch gekennzeichnet, dass** der Kopf (2) der Schraube eine Hülse ist.

4. Montageverfahren des Kammerprofils (10) am feststehenden Element anhand einer Schraube (20) mit einem Gewindeteil (1) und einem Kopf (2), wobei das Kammerprofil (10) mindestens eine Kammer (3) mit einer oberen Wand (12) und einer unteren Wand (14) aufweist, die koaxiale Öffnungen (12', 14') für die Schraube (20) aufweisen, wobei der Gewindeteil (1) der Schraube (20) eine Länge hat, die kleiner oder gleich der Summe der Höhe aller Kammern und der Dicke der Profilwände entspricht, durch die die Schraube verläuft, und im montierten Zustand der Kopf (2) der Schraube sich im Kammerprofil (10) befindet und die Höhe des Kopfs (2) von der nächsten Fläche der oberen Wand (12), durch die der Kopf (2) der Schraube läuft, um einen Abstand entfernt ist, der kleiner als die Länge des aus der Kammer des Profils (10) hervortretenden Gewindeteils (1) ist, und die Schraube (20) in die Kammer des Profils (10) durch die Öffnung (12') in der oberen Wand (12) sowie durch das Kammerprofil (10) in der Weise eingeführt wird, dass der Gewindeteil (1) aus der Öffnung (14') der unteren Wand (14) hervortritt, **dadurch gekennzeichnet, dass** bei der Einführung der Schraube (20) des Kammerprofils (10), wenn der Gewindeteil (1) der Schraube die Öffnung (14') in der unteren Wand (14) erreicht, der Kopf (2) der Schraube weiter durch die Innenkante der Öffnung (12') in der unteren Wand (12) des Kammerprofils (10) bis zu der Stellung geführt wird, in welcher der Gewindeteil (1) eine stabile Verbindung mit dem feststehenden Element erreicht, und wenn die Schraube (20) vollständig montiert ist, der Kopf (2) der Schraube an der Innenfläche der unteren Wand (14) um die Öffnung (14') herum anlehnt.

5. Montageverfahren nach Anspruch 4, **dadurch gekennzeichnet, dass** sich in der vollständig montierten Position der Kopf (2) der Schraube (20) in der Profilkammer (10) befindet, ohne daraus hervorzustehen.

6. Montageverfahren nach Anspruch 4 oder 5, **dadurch gekennzeichnet, dass** in der vollständig montierten Position der Gewindeteil (1) der Schraube (20), der von der unteren Wand (14) des Kammerprofils (10) hervorragt, zumindest teilweise im festen Element eingelassen ist.

7. Montagesatz nach Anspruch 4-6, **dadurch gekennzeichnet, dass** der Kopf (2) und der Gewindeteil (1) ein monolithisches Element darstellen.

## Revendications

1. Kit de montage composé d'un profilé à chambre (10) et d'une vis (20), munie d'une partie filetée (1) et d'une tête (2), le profilé à chambre (10) comportant au moins une chambre (3) avec une paroi supérieure (12) et une paroi inférieure (14), possédant des trous coaxiaux (12', 14') destinés à la vis (20), la partie filetée (1) de la vis ayant une longueur inférieure ou égale à la somme des hauteurs de toutes les chambres et des épaisseurs des parois du profilé à travers lequel la vis passe, et en position installée, la tête (2) de la vis se trouve dans le profilé à chambre (10) et un fragment de la partie filetée (1) se trouve à l'extérieur de la paroi inférieure (14), et la tête (2) se trouve dans une position dans laquelle la distance par rapport à la surface intérieure la plus proche de la paroi du profilé à travers laquelle passe la tête de la vis est inférieure à la longueur de la partie filetée (1) qui sort du profilé à chambre (10), **caractérisé en ce que** la vis (20) et la tête (2) de la vis sont dimensionnées en fonction du profilé à chambre (10) de sorte que lorsque la vis pénètre dans la chambre du profilé, lorsque la partie filetée (1) de la vis atteint le trou (14') dans la paroi inférieure (14), la tête (2) de la vis est encore guidée par le bord intérieur du trou (12') dans la paroi inférieure (12) du profilé à chambre (10) jusqu'à ce que la partie filetée (1) atteigne une connexion stable avec la partie fixe, et que lorsque la vis (20) est complètement montée, la tête (2) de la vis repose contre la surface intérieure de la paroi inférieure (14) autour du trou (14').

2. Kit correspondant à l'une des revendications mentionnées ci-dessus, **caractérisé en ce que** la tête (2) de la vis et la partie filetée (1) constituent un élément monolithique.

3. Kit correspondant à l'une des revendications mentionnées ci-dessus, **caractérisé en ce que** la tête (2) de la vis est une douille.

4. Mode de montage du profilé à chambre (10) à l'élément fixe à l'aide d'une vis (20), munie d'une partie filetée (1) et d'une tête (2), le profilé à chambre (10) comportant au moins une chambre (3) avec une paroi supérieure (12) et une paroi inférieure (14), possédant des trous coaxiaux (12', 14') destinés à la vis (20), la partie filetée (1) de la vis (20) ayant une longueur inférieure ou égale à la somme des hauteurs de toutes les chambres et des épaisseurs des parois intérieures du profilé à travers lesquelles la vis passe, et en position installée, la tête (2) de la vis se trouve dans le profilé à chambre (10) et la hauteur de la tête (2) est écartée de la surface la plus proche de la paroi supérieure (12) traversée par la tête (2) de la vis d'une distance moindre que la longuer de la partie filetée (1) sortant de la chambre (10) du profilé et la vis (20) est introduite dans 1 profilé à chambre (10) à travers le trou (12') dans la paroi supérieure (12) et par le profilé à chambre (10) de la sorte à ce que la partie filetée (1) sorte du trou (14') de la paroi inférieure (14), **caractérisé en ce que** lors de l'introduction de la vis (20) du profilé à chambre (10), lorsque la partie filetée (1) de la vis atteint le trou (14') dans la paroi inférieure (14), la tête (2) de la vis est encore guidée par le bord intérieur du trou (12') dans la paroi inférieure (12) du profilé à chambre (10) jusqu'à ce que la partie filetée (1) atteigne une connexion stable avec la partie fixe, et que lorsque la vis (20) est complètement montée, la tête (2) de la vis repose contre la surface intérieure de la paroi inférieure (14) autour du trou (14').

5. Mode de montage selon la revendication 4, **caractérisé en ce que** en position complètement montée la tête (2) de la vis (20) se trouve dans le profilé à chambre (10) sans en faire saillie.

6. Mode de montage selon les revendications 4 ou 5, **caractérisé en ce que** en position complètement montée la partie filetée (1) de la vis (20) sortant de la paroi inférieure (14) du profilé à chambre (10) est au moins partiellement plongée dans un élément fixe.

7. Mode selon les revendications de 4 à 6, **caractérisé en ce que** la tête (2) et la partie filetée (1) constituent un élément monolithique.
